# EUROPÄISCHE PATENTANMELDUNG

(11) **EP 2 573 530 A2**
(43) Veröffentlichungstag der Anmeldung: **27.03.2013**
(21) Anmeldenummer: 12181488.3
(22) Anmeldetag: 23.08.2012
(51) Int. Cl.: G01J 5/04, G01J 5/02, H01L 31/00

(54) **Sensor und verfahren zum herstellen eines sensors**

(30) Priorität: 26.08.2011 DE 102011081641
(71) Anmelder: Fraunhofer-Gesellschaft zur Förderung der angewandten Forschung e.V., 80686 München (DE)
(72) Erfinder: Vogt, Holger, 45481 Mühlheim (DE); Weiler, Dirk, 44627 Herne (DE); Kropelnicki, Piotr, 50668 Köln (DE)
(74) Vertreter: Schenk, Markus

(57) **Zusammenfassung**

Ein Sensor (100) umfasst ein Substrat (110), eine Membran (120), einen ersten und einen zweiten Abstandshalter (130-1, 130-2), die auf dem Substrat angeordnet sind, eine erste Haltestruktur (140-1), die seitlich neben der Membran (120) an dem ersten Abstandshalter gehalten wird und eine erste Elektrode (150-1) auf einer dem Substrat zugewandten ersten Hauptseite der Membran kontaktiert, und eine zweite Haltestruktur (140-2), die seitlich neben der Membran (120) von dem zweiten Abstandshalter gehalten wird und eine zweite Elektrode (150-2) auf einer der ersten Hauptseite gegenüberliegenden zweiten Hauptseite der Membran kontaktiert, so dass die Membran (10) über den ersten und zweiten Abstandshalter aufgehängt und mit Kontaktflächen (112-1, 112-2) des Substrats (110) elektrisch verbunden ist.

## Beschreibung

Ausführungsbeispiele der Erfindung beziehen sich auf einen Sensor und ein Verfahren zum Herstellen eines Sensors. Weitere Ausführungsbeispiele der Erfindung beziehen sich auf eine Kontaktierung von einkristallinen, optischen Sensoren.

Die Detektion von infraroter Strahlung gewinnt in vielen unterschiedlichen Bereichen zunehmend an Bedeutung. Für die Automobilindustrie liegt diese Bedeutung in der Erreichung einer höheren Sicherheit von beispielsweise Fußgängern, die mit Infrarotsensoren auch in dunkler Umgebung sichtbar gemacht werden können. Koppelt man ein automatisches Bremssystem an eine Sensorik, können dadurch Unfälle vermieden oder deren Auswirkungen zumindest gemildert werden. Weitere Anwendungen von Infrarotsensoren umfassen beispielsweise die Inspektion von technischen Geräten (z. B. elektrische Leitungen oder auch Leiterplatinen) oder Gebäuden. In der Zukunft können auch medizinische Anwendungen relevant werden. Schon jetzt werden Infrarotsensoren im Bereich der Gebäude, Gelände- und Grenzüberwachung eingesetzt.

Für viele dieser Anwendungen ist die erreichbare Auflösung von minimalen Temperaturunterschieden ein wichtiges Qualitätskriterium des verwendeten Messinstrumentes. Diese Sensitivität wird in kommerziellen Geräten zumeist als NETD ("Noise Equivalent Temperature Difference") angegeben, und es werden in ungekühlten Bolometern Werte von beispielsweise unter 100 mK Temperaturunterschied erreicht. Die Bezeichnung dieser Kenngröße macht auch gleich die interne Begrenzung von Sensoren deutlich, die durch die Rauscheigenschaften des verwendeten Systems gegeben ist. Verwendet man beispielsweise als Detektormaterial eine dünne Membran als Sensor, die sich unter dem Einfluss der Infrarotstrahlung aufheizt und dabei ihren elektrischen Widerstand ändert, so bestimmen die elektrischen Rauscheigenschaften dieses Systems, welche Widerstands- (und damit Temperatur-)änderungen noch detektiert und vom Rauschuntergrund separiert werden können. Ist die durch die Temperaturänderung induzierte Änderung des Widerstands des Materials kleiner als das Rauschen der elektrischen Parameter, so wird sie nicht mehr aufgelöst.

In vielen homogenen amorphen Sensormaterialien (wie beispielsweise Silizium, Vanadiumoxid usw.) ist die prozentuale Widerstandsänderung proportional zur Temperaturänderung. Die Proportionalitätskonstante ist dabei im Wesentlichen durch die Wahl des Materials und die Prozessparameter gegeben, wobei ihrer Optimierung im Allgemeinen enge Grenzen gesetzt sind. Typische Werte für die Widerstandsänderung liegen in einem Bereich von etwa 2 bis 3 % pro K.

Sofern die Widerstandsänderung durch die Materialeigenschaften des Sensors gegeben ist, bleiben noch zwei weitere wesentliche Möglichkeiten, in größerem Maße auf die Sensoreigenschaften einzuwirken. Eine erste Möglichkeit besteht darin, die Sensorelemente möglichst groß zu machen. Je größer die für den Sensor und die zugehörigen thermischen Isolationsbereiche zur Verfügung stehende Fläche ist, desto mehr Strahlung kann absorbiert werden, bzw. desto mehr Strahlungsenergie wird in eine Temperaturerhöhung des Sensors umgewandelt. Dieser Ansatz weist den entscheidenden Nachteil auf, dass damit nicht dem zunehmenden Wunsch nach einer Miniaturisierung und damit Verbilligung der Bauelemente Rechnung getragen werden kann.

Sofern das Ziel darin besteht, aus Kostengründen bei konstanter Baugröße das Signal/Rauschverhältnis zu optimieren, bleibt als weiterer Ansatz die Möglichkeit, das Rauschen zu minimieren. In elektronischen Bauelementen gibt es unterschiedliche Rauschquellen. In amorphen Materialen dominiert in der Regel das sog. 1/f-Rauschen, bei dem die Rauschleistungsdichte umgekehrt proportional zur Frequenz f ist. Dies ist insofern ein schwerwiegendes Problem, als z. B. die üblicherweise verwendeten integrativen Ausleseschaltungen (Tiefpass) nicht geeignet sind, die dominierenden niederfrequenten Anteile dieses Rauschens zu unterdrücken.

Eine Möglichkeit, um dieses Problem zu umgehen, besteht darin, einkristallines Material, wie beispielsweise Silizium, zu verwenden. In diesen Materialien ist das 1/f-Rauschen in der Regel nicht dominant, und durch eine Integration des Messsignals kann ein gutes Signal/Rauschverhältnis erreicht werden. Dieser Vorteil wird jedoch üblicherweise mit einer stark verringerten Abhängigkeit des Widerstands von der Temperatur erkauft. Beispielsweise kann die Temperaturabhängigkeit des Widerstands einen Wert von 0,3 % pro K aufweisen.

Aus diesem Grunde kann es vorteilhaft sein, auch einkristalline Dioden, Transistoren und Quanten-Well-Strukturen als IR-Sensoren zu verwenden, die ein geringes 1/f-Rauschen bei gleichzeitig hohem Temperaturkoeffizienten aufweisen. Allerdings ist die Integration von solchen thermisch isolierten Sensoren in einem CMOS-Prozess durchaus aufwändig. Der zunächst verwendete Ansatz, die isolierten Dioden durch geeignete Unterätzungen direkt im CMOS-Wafer zu fertigen, weist den Nachteil auf, sehr flächenintensiv zu sein, ohne dabei brauchbare Isolations- und Absorptionseigenschaften zu vereinen.

Die Aufgabe der vorliegenden Erfindung besteht daher darin, einen Sensor zu schaffen, der eine verbesserte Flächenausnutzung und eine höhere Sensitivität aufweist und gleichzeitig ein flexibleres oder sogar präziseres Auslesen desselben ermöglicht.

Diese Aufgabe wird durch einen Sensor nach Anspruch 1 und ein Verfahren nach Anspruch 11 gelöst.

Ausführungsbeispiele der vorliegenden Erfindung schaffen einen Sensor mit einem Substrat, einer Membran, einem ersten und einem zweiten Abstandshalter, einer ersten Haltestruktur und einer zweiten Haltestruktur. Hierbei sind der erste und zweite Abstandshalter auf dem Substrat angeordnet. Die erste Haltestruktur wird seitlich neben der Membran von dem ersten Abstandshalter gehalten und kontaktiert eine erste Elektrode auf einer dem Substrat zugewandten ersten Hauptseite der Membran. Die zweite Haltestruktur wird seitlich neben der Membran von dem zweiten Abstandshalter gehalten und kontaktiert eine zweite Elektrode auf einer der ersten Hauptseite gegenüberliegenden zweiten Hauptseite der Membran. Dadurch kann die Membran über den ersten und den zweiten Abstandshalter aufgehängt und mit Kontaktflächen des Substrats elektrisch verbunden werden.

Der Kerngedanke der vorliegenden Erfindung ist, dass die oben genannte verbesserte Flächenausnutzung und höhere Sensitivität bzw. das flexiblere oder präzisere Auslesen erreicht werden kann, wenn eine erste Haltestruktur, die seitlich neben der Membran von dem ersten Abstandshalter gehalten wird und eine erste Elektrode auf einer dem Substrat zugewandten ersten Hauptseite der Membran kontaktiert, und eine zweite Haltestruktur, die seitlich neben der Membran und dem zweiten Abstandshalter gehalten wird und eine zweite Elektrode auf einer der ersten Hauptseite gegenüberliegenden zweiten Hauptseite der Membran kontaktiert, bereitgestellt werden. Somit kann die Membran über den ersten und zweiten Abstandshalter aufgehängt und mit den Kontaktflächen des Substrats elektrisch verbunden werden. Ferner kann dadurch die Membran nicht nur lateral, sondern auch vertikal kontaktiert werden. Dies führt dazu, dass das 1/f-Rauschen vermieden oder zumindest unterdrückt werden kann. Somit kann einerseits die Flächenausnutzung verbessert und die Sensitivität erhöht werden, und andererseits kann dadurch das flexiblere oder das präzisere Auslesen erreicht werden.

Bei weiteren Ausführungsbeispielen der vorliegenden Erfindung weist die Membran einen pn-Übergang auf, der sich parallel zu einer Oberfläche des Substrats erstreckt, so dass der pn-Übergang seriell zwischen die Kontaktflächen des Substrats geschaltet ist.

Bei weiteren Ausführungsbeispielen der vorliegenden Erfindung weist der Sensor ferner eine Ausleseschaltung auf, die ausgelegt ist, um den pn-Übergang alternierend in einem ersten Betriebszyklus in Flussrichtung und in einem zweiten Betriebszyklus in Sperrrichtung zu betreiben. Dadurch kann in dem ersten Betriebszyklus einfallende IR-Strahlung und in dem zweiten Betriebszyklus einfallende UV- und/oder Weißlichtstrahlung detektiert werden.

Bei weiteren Ausführungsbeispielen der vorliegenden Erfindung weist der Sensor ferner eine dritte und eine vierte Elektrode auf, wobei die erste bis vierte Elektrode entlang einer Flussrichtung beabstandet voneinander auf einer jeweiligen der ersten und zweiten Hauptseite der Membran angeordnet sind. Der Sensor weist hierbei ferner eine Ausleseschaltung auf, die ausgelegt ist, um über ein erstes Paar der ersten bis vierten Elektroden, die entlang der Flussrichtung unter den ersten bis vierten Elektroden am weitesten voneinander beabstandet sind, einen vorbestimmten Stromfluss zu erzeugen und eine elektrische Spannung zwischen einem zweiten Paar der ersten bis vierten Elektroden, die in Flussrichtung zwischen dem ersten Paar liegen, zu erfassen. Somit kann eine Vierpunktmessung realisiert werden, mit der ein Widerstand bzw. eine Widerstandsänderung der Membran sehr genau gemessen werden kann.

Bei weiteren Ausführungsbeispielen der vorliegenden Erfindung weist die Membran einen vertikalen Bipolartransistor oder einen Feldeffekttransistor auf. Mit solchen Strukturen kann ein aufgenommenes Signal direkt an der Membran bzw. am Sensorelement verstärkt werden, so dass die Ausdehnung einer Ausleseschaltung, die zumindest teilweise in dem Substrat lateral zwischen dem ersten und zweiten Abstandshalter angeordnet ist, wesentlich verkleinert werden kann.

Weitere Ausführungsbeispiele der vorliegenden Erfindung schaffen ein Verfahren zum Herstellen eines Sensors. Das Verfahren umfasst beispielsweise die folgenden Schritte. Zunächst wird ein erster Wafer mit einem Trägersubstrat und einer strukturierten Membranschicht, die auf dem Trägersubstrat angeordnet ist und vorgesehen ist, von einer Membran des Sensors umfasst sein, und einer ersten Haltestruktur, die eine erste Elektrode auf einer dem Trägersubstrat abgewandten ersten Hauptseite der Membranschicht kontaktiert und sich seitlich von der Membranschicht weg erstreckt, bereitgestellt. Dann wird ein zweiter Wafer mit einem Substrat bereitgestellt. Dann werden der erste Wafer und der zweite Wafer über ein Bondmaterial verbunden. Dann wird das Trägersubstrat entfernt, so dass die der ersten Hauptseite gegenüberliegende zweite Hauptseite der Membranschicht frei liegt. Dann wird eine zweite Haltestruktur aufgebracht, so dass dieselbe eine zweite Elektrode auf einer der ersten Hauptseiten gegenüberliegenden zweiten Hauptseite der Membranschicht kontaktiert und sich seitlich von der Membranschicht weg erstreckt. Dann werden zwei Abstandshalter gebildet, die die erste und zweite Haltestruktur jeweils seitlich neben der Membran tragen. Schließlich wird das Bondmaterial entfernt. Durch solch ein Herstellungsverfahren kann eine vertikale Kontaktierung der Membran bzw. des Sensorelements erreicht werden.

Ausführungsbeispiele der Erfindung werden nachfolgend bezugnehmend auf die beiliegenden Figuren, in denen gleiche oder gleich wirkende Elemente mit gleichen Bezugszeichen bezeichnet sind, näher erläutert. Es zeigen:
- Fig. 1: eine Querschnittsansicht eines Sensors gemäß einem Ausführungsbeispiel der vorliegenden Erfindung;
- Fig. 2: eine Querschnittsansicht eines Sensors mit einem pn-Übergang gemäß einem weiteren Ausführungsbeispiel der vorliegenden Erfindung;
- Fig. 3: eine Querschnittsansicht eines Sensors für eine Vierpunktmessung gemäß einem weiteren Ausführungsbeispiel der vorliegenden Erfindung;
- Fig. 4: eine Querschnittsansicht eines Sensors mit einem vertikalen Bipolartransistor gemäß einem weiteren Ausführungsbeispiel der vorliegenden Erfindung;
- Fig. 5: eine Querschnittsansicht eines Sensors mit einem Feldeffekttransistor gemäß einem weiteren Ausführungsbeispiel der vorliegenden Erfindung;
- Fig. 6a bis 6d: Querschnittsansichten zur Verdeutlichung eines erfindungsgemäßen Bereitstellens eines Sensorwafers;
- Fig. 7: eine Querschnittsansicht zur Verdeutlichung eines erfindungsgemäßen Verbindens eines Sensorwafers mit einem Substratwafer über ein Bondmaterial; und
- Fig. 8a bis 8c: Querschnittsansichten zur Verdeutlichung eines erfindungsgemäßen Bearbeitens von miteinander verbundenen Sensor- und Substratwafern.

Bevor im Folgenden die vorliegende Erfindung anhand der Figuren näher erläutert wird, wird darauf hingewiesen, dass in den nachfolgend dargestellten Ausführungsbeispielen gleiche Elemente oder funktionell gleiche Elemente in den Figuren mit den gleichen Bezugszeichen versehen sind. Eine Beschreibung von Elementen mit gleichen Bezugszeichen ist daher gegenseitig austauschbar und/oder in den verschiedenen Ausführungsbeispielen aufeinander anwendbar.

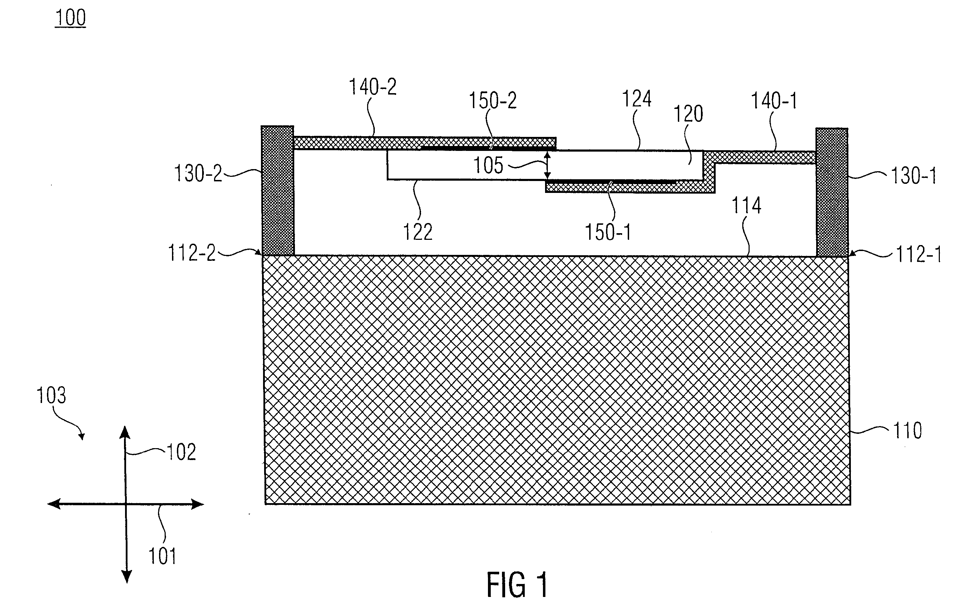

Fig. 1 zeigt eine Querschnittsansicht eines Sensors 100.gemäß einem Ausführungsbeispiel der vorliegenden Erfindung. Wie in Fig. 1 gezeigt, weist der Sensor 100 ein Substrat 110, eine Membran 120, einen ersten und einen zweiten Abstandshalter 130-1, 130-2, eine erste Haltestruktur 140-1 und eine zweite Haltestruktur 140-2 auf. Hierbei sind der erste und der zweite Abstandshalter 130-1, 130-2 auf dem Substrat 110 angeordnet. Bei dem in Fig. 1 gezeigten Sensor 100 wird die erste Halterstruktur 140-1 seitlich neben der Membran 120 von dem ersten Abstandshalter 130-1 gehalten und kontaktiert eine erste Elektrode 150-1 auf einer dem Substrat 110 zugewandten ersten Hauptseite 122 der Membran 120. Ferner wird die zweite Haltestruktur 140-2 seitlich neben der Membran 120 von dem zweiten Abstandshalter 130-2 gehalten und kontaktiert eine zweite Elektrode 150-2 auf einer der ersten Hauptseite 122 gegenüberliegenden zweiten Hauptseite 124 der Membran 120. Somit kann bei dem Ausführungsbeispiel gemäß Fig. 1 die Membran 120 über den ersten und zweiten Abstandshalter 130-1, 130-2 aufgehängt und mit Kontaktflächen 112-1, 112-2 des Substrats 110 elektrisch verbunden werden.

Bei weiteren Ausführungsbeispielen kann die Membran 120 des Sensors 100 eine Halbleiterschicht mit einem einkristallinen Material oder mit einem amorphen Material aufweisen.

Ferner kann der in Fig. 1 gezeigte Sensor 100 eine Ausleseschaltung (nicht gezeigt) aufweisen, wobei zumindest ein Teil der Ausleseschaltung in dem Substrat 110 lateral zwischen dem ersten und dem zweiten Abstandshalter 130-1, 130-2 angeordnet ist.

Bei dem in Fig. 1 gezeigten Ausführungsbeispiel kann der Sensor 100 ein optischer Sensor, wie beispielsweise ein Bolometer, oder ein elektro-(mechanischer) Sensor, wie beispielsweise ein Sensor, basierend auf einem mechanischen Schwinger, sein.

Durch die in Fig. 1 gezeigte vertikale Kontaktierung der beiden gegenüberliegenden Hauptseiten 122, 124 der Membran 120 über die erste und zweite Elektrode 150-1, 150-2 kann ein Stromfluss mit einer im Wesentlichen vertikalen Flussrichtung (vertikale Stromflussrichtung) erzeugt werden. In Fig. 1 entspricht eine horizontale Richtung einer Richtung parallel zu einer ersten Achse 101 eines Koordinatensystems 103, während eine vertikale Richtung einer Richtung parallel zu einer zweiten Achse 102 des Koordinatensystems 103 entspricht. Hierbei ist die erste Achse 101 des Koordinatensystems 103 definiert als eine Achse, die parallel zu einer Oberfläche des Substrats 110 ist, während die zweite Achse 102 des Koordinatensystems 103 als eine Achse definiert ist, die senkrecht zu der Oberfläche des Substrats 110 ist. Die im Wesentlichen vertikale Flussrichtung ist somit parallel zu der zweiten Achse 102 des Koordinatensystems 103 und durch einen zwischen den beiden gegenüberliegenden Hauptseiten 122, 124 der Membran 120 liegenden Pfeil 105 angedeutet.

Bei dem in Fig. 1 gezeigten Ausführungsbeispiel kann die Membran 120 des Sensors 100 aus einem einkristallinen Material bestehen, wobei über eine vertikale Kontaktierung mit der ersten und der zweiten Elektrode 150-1, 150-2 ein Stromfluss mit einer vertikalen Flussrichtung durch das einkristalline Material erzeugt werden kann. Dies ist dahingehend vorteilhaft, dass das 1/f-Rauschen im einkristallinen Material vermieden oder zumindest unterdrückt werden kann, wodurch die elektrischen Rauscheigenschaften des Sensors erheblich verbessert werden können.

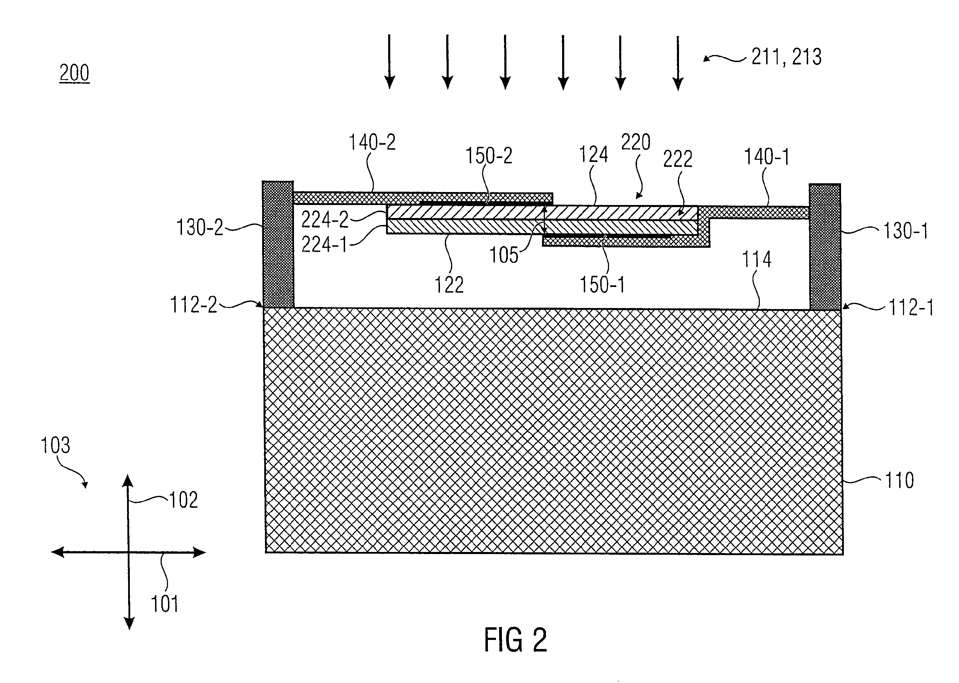

Fig. 2 zeigt eine Querschnittsansicht eines Sensors 200 mit einem pn-Übergang gemäß einem weiteren Ausführungsbeispiel der vorliegenden Erfindung. Hierbei entspricht der Sensor 200 mit einer Membran 220 in Fig. 2 im Wesentlichen dem Sensor 100 mit der Membran 120 in Fig. 1. Bei dem in Fig. 2 gezeigten Ausführungsbeispiel weist die Membran 220 des Sensors 200 einen pn-Übergang 222 auf. Wie in Fig. 2 gezeigt, erstreckt sich der pn-Übergang 222 parallel zu einer Oberfläche des Substrats 110. In Fig. 2 ist wiederum das Koordinatensystem 103 von Fig. 1 gezeigt, wobei die erste und die zweite Achse 101, 102 des Koordinatensystems 103 parallel bzw. senkrecht zu der Oberfläche des Substrats 110 sind. Der pn-Übergang 222 der Membran 220 ist somit parallel zur ersten Achse 101 des Koordinatensystems 103.

Bei dem Ausführungsbeispiel gemäß Fig. 2 weist die Membran 220 komplementär dotierte Halbleiterschichten 224-1, 224-2 auf. Die komplementär dotierten Halbleiterschichten 224-1, 224-2 können beispielsweise p-dotierte oder n-dotierte Halbleiterschichten sein, die den pn-Übergang 222 bilden. Bezugnehmend auf Fig. 2 ist die Anordnung der komplementär dotierten Halbleiterschichten 224-1, 224-2 derart, dass der pn-Übergang 222 seriell zwischen die Kontaktflächen 112-1, 112-2 des Substrats 110 geschaltet ist. Wie bei dem in Fig. 1 gezeigten Sensor 100 können bei dem in Fig. 2 gezeigten Sensor 200 die beiden gegenüberliegenden Hauptseiten 122, 124 der Membran 220 über die erste und die zweite Elektrode 150-1, 150-2 so kontaktiert werden, dass ein Stromfluss mit einer im Wesentlichen vertikalen Flussrichtung (Pfeil 105) erzeugt werden kann (vertikale Kontaktierung). Die im Wesentlichen vertikale Flussrichtung ist hierbei parallel zur zweiten Achse 102 des Koordinatensystems 103.

Bei Ausführungsbeispielen gemäß Fig. 2 weist der Sensor 200 ferner eine Ausleseschaltung (nicht gezeigt) auf, die ausgelegt ist, um den pn-Übergang 222 in Flussrichtung zu betreiben, um einfallende IR-(Infrarot-)Strahlung 211 zu detektieren. Der Sensor 200 kann somit beispielsweise ein Infrarotsensor, basierend auf einer Diode im Vorwärtsbetrieb bzw. auf einem in Flussrichtung betriebenen pn-Übergang sein. Hierbei kann der Infrarotsensor für einfallende IR-Strahlung mit einer typisch zu detektierenden IR-Wellenlänge von beispielsweise 10 µm oder bis zu einer maximal zu detektierenden IR-Wellenlänge von beispielsweise 14 µm empfindlich sein (IR-Detektion).

Bei weiteren Ausführungsbeispielen gemäß Fig. 2 weist der Sensor 200 ferner eine Ausleseschaltung auf, die ausgelegt ist, um den pn-Übergang 222 in Sperrrichtung zu betreiben, um einfallende UV-(Ultraviolett-) und/oder Weißlichtstrahlung 213 zu detektieren. Der Sensor 200 kann somit beispielsweise ein UV-/Weißlicht-Sensor, basierend auf einer Diode im Sperrbetrieb bzw. auf einem in Sperrrichtung betriebenen pn-Übergang. Hierbei kann der UV-/Weißlicht-Sensor für einfallende UV- und/oder Weißlichtstrahlung bis zu einer minimal zu detektierenden UV-Wellenlänge von beispielsweise 300 nm empfindlich sein (UV-/Weißlicht-Detektion).

Bei weiteren Ausführungsbeispielen gemäß Fig. 2 kann die Ausleseschaltung des Sensors 200 ausgelegt sein, um den pn-Übergang 222 alternierend in einem ersten Betriebszyklus in Flussrichtung und in einem zweiten Betriebszyklus in Sperrrichtung zu betreiben, um in dem ersten Betriebszyklus einfallende IR-Strahlung 211 und in dem zweiten Betriebszyklus einfallende UV- und/oder Weißlichtstrahlung 213 zu detektieren. Somit kann der Sensor 200 beispielsweise ein Multiwellenlängensensor sein, der auf einem alternierend in Flussrichtung und in Sperrrichtung betriebenen pn-Übergang (Diode) basiert. Durch diesen Multiwellenlängensensor kann beispielsweise eine alternierende Detektion von IR-Strahlung und UV-/Weißlicht-Strahlung ermöglicht werden.

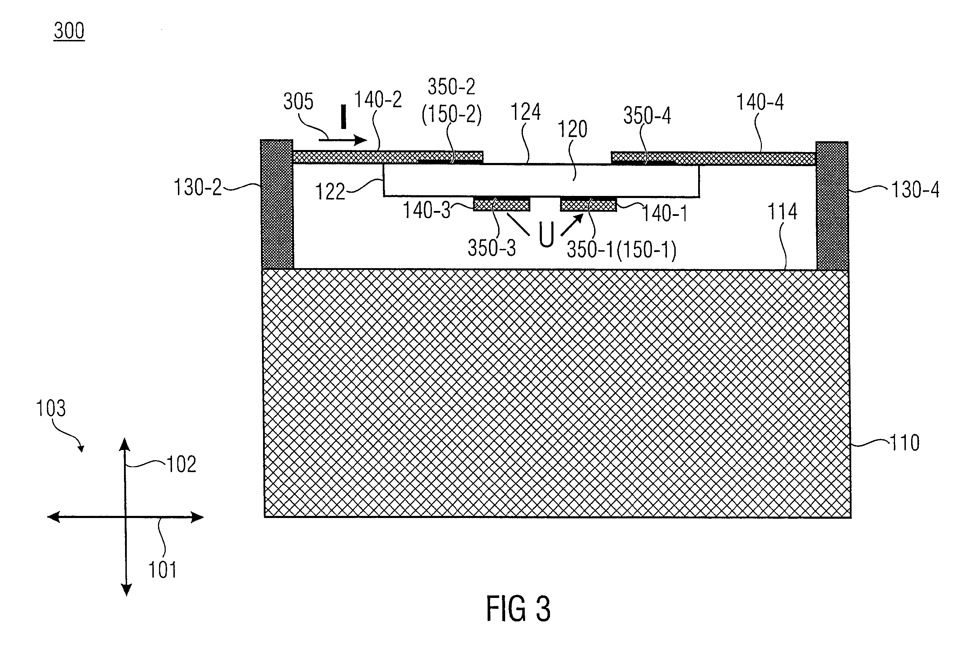

Fig. 3 zeigt eine Querschnittsansicht eines Sensors 300 für eine Vierpunktmessung gemäß einem weiteren Ausführungsbeispiel der vorliegenden Erfindung. Der Sensor 300 mit der ersten und zweiten Elektrode 350-1, 350-2 in Fig. 3 entspricht im Wesentlichen dem Sensor 100 mit der ersten und zweiten Elektrode 150-1, 150-2 in Fig. 1. Ferner weist der Sensor 300 einen dritten und einen vierten Abstandshalter (130-4), eine dritte und eine vierte Haltestruktur 140-3, 140-4 und eine dritte und eine vierte Elektrode 350-3, 350-4 auf. In der Querschnittsansicht von Fig. 3 sind der erste und der dritte Abstandshalter nicht gezeigt. Bezugnehmend auf Fig. 3 sind die erste bis vierte Elektrode 350-1, 350-2, 350-3, 350-4 entlang einer Flussrichtung 305 beabstandet voneinander auf einer jeweiligen der ersten und der zweiten Hauptseite 122, 124 der Membran 120 angeordnet. In Fig. 3 ist wiederum das Koordinatensystem 103 von Fig. 1 gezeigt, wobei die erste und zweite Achse 101, 102 parallel bzw. senkrecht zu der Oberfläche des Substrats 110 sind. Die Flussrichtung 305, entlang derer die erste bis vierte Elektrode 350-1, 350-2, 350-3, 350-4 angeordnet sind, entspricht im Wesentlichen einer Stromflussrichtung von einem Strom (I) parallel zu der ersten Achse 101 des Koordinatensystems 103. Der dritte und vierte Abstandshalter sind auf dem Substrat 110 angeordnet. Ferner wird die dritte Haltestruktur 140-3 seitlich neben der Membran 120 von dem dritten Abstandshalter gehalten und kontaktiert die dritte Elektrode 350-3, während die vierte Haltestruktur 140-4 seitlich neben der Membran 120 von dem vierten Abstandshalter gehalten wird und die vierte Elektrode 350-4 kontaktiert.

Bei dem in Fig. 3 gezeigten Ausführungsbeispiel ist die Ausleseschaltung des Sensors 300 ausgelegt, um über ein erstes Paar 350-2, 350-4 der ersten bis vierten Elektroden 350-1, 350-2, 350-3, 350-4, die entlang der Flussrichtung 305 unter den ersten bis vierten Elektroden 350-1, 350-2, 350-3, 350-4 am weitesten voneinander beabstandet sind, einen vorbestimmten Stromfluss I zu erzeugen und eine elektrische Spannung U zwischen einem zweiten Paar 350-1, 350-3 der ersten bis vierten Elektroden 350-1, 350-2, 350-3, 350-4, die in Flussrichtung 305 zwischen dem ersten Paar 350-2, 350-4 liegen, zu erfassen. Durch das Erzeugen des vorbestimmten Stromflusses I über das (äußere) erste Paar 350-2, 350-4 und das Erfassen der elektrischen Spannung U zwischen dem (inneren) zweiten Paar 350-1, 350-3 kann eine Vierpunktmessung zur präzisen Bestimmung eines elektrischen Widerstands der Membran 120 realisiert werden.

Mit anderen Worten, durch den in Fig. 3 gezeigten Sensor 300 kann eine Vierpunktmessung, basierend auf einer mehrfachen Kontaktierung der Membran 120, ermöglicht werden. Beispielsweise können die vier Elektroden 350-1, 350-2, 350-3, 350-4 in einer Reihe auf der Membran angeordnet sein, wobei über die beiden äußeren Elektroden 350-2, 350-4 ein bekannter Strom I eingeprägt werden kann, während über die beiden inneren Elektroden 350-1, 350-3 ein Spannungsabfall U an der Membran bzw. am Sensorelement gemessen werden kann. Basierend auf dem gemessenen Spannungsabfall U und auf dem bekannten Strom I kann der Widerstand der Membran bzw. des Sensorelements sehr genau ermittelt werden. Somit kann durch die mehrfache Kontaktierung des Sensorelements (Vierpunktmessung) eine präzise Bestimmung des Widerstands bzw. der Widerstandsänderung des Sensorelements durchgeführt werden.

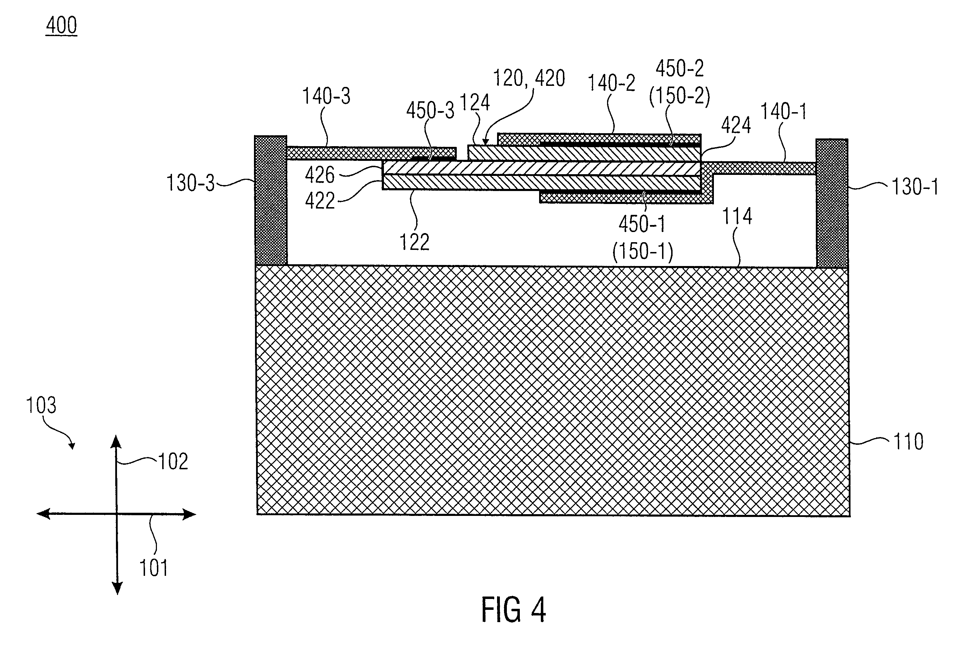

Fig. 4 zeigt eine Querschnittsansicht eines Sensors 400 mit einem vertikalen Bipolartransistor gemäß einem weiteren Ausführungsbeispiel der vorliegenden Erfindung. Der Sensor 400 mit der ersten und der zweiten Elektrode 450-1, 450-2 in Fig. 4 entspricht im Wesentlichen dem Sensor 100 mit der ersten und der zweiten Elektrode 150-1, 150-2 in Fig. 1. Bei dem in Fig. 4 gezeigten Ausführungsbeispiel weist der Sensor 400 ferner einen dritten Abstandshalter 130-3, eine dritte Haltstruktur 140-3 und eine dritte Elektrode 450-3 auf, wobei der dritte Abstandshalter 130-3 auf dem Substrat 110 angeordnet ist. In der Querschnittsansicht von Fig. 4 ist der zweite Abstandshalter nicht gezeigt. Die dritte Haltestruktur 140-3 wird seitlich neben der Membran 120 von dem dritten Abstandshalter 130-3 gehalten und kontaktiert die dritte Elektrode 450-3.

Bei dem in Fig. 4 gezeigten Ausführungsbeispiel weist die Membran 120 des Sensors 400 einen vertikalen Bipolartransistor 420 mit einem Emitter-, Kollektor- und Basisanschluss 450-1, 450-2, 450-3 (bzw. Emitter, Kollektor und Basis 422, 424, 426) auf. Emitter, Kollektor und Basis 422, 424, 426 des vertikalen Bipolartransistors 420 können beispielsweise eine erste Transistorstruktur (pnp-Transistor) mit zwei p-dotierten Halbleiterschichten (Emitter und Kollektor 422, 424) und einer dazwischenliegenden n-dotierten Halbleiterschicht (Basis 426) oder eine zweite Transistorstruktur (npn-Transistor) mit zwei n-dotierten Halbleiterschichten (Emitter und Kollektor 422, 424) und einer dazwischenliegenden p-dotierten Halbleiterschicht (Basis 426) bilden. Bei der ersten Transistorstruktur werden pn-Übergänge jeweils von einer der p-dotierten Halbleiterschichten und der n-dotierten Halbleiterschicht gebildet, während bei der zweiten Transistorstruktur die pn-Übergänge jeweils von einer der n-dotierten Halbleiterschichten und der p-dotierten Halbleiterschicht gebildet werden. Wie in Fig. 4 gezeigt, bilden die erste und die zweite Elektrode 450-1, 450-2 jeweils den Emitter- und den Kollektoranschluss 450-1, 450-2. Ferner bildet die dritte Elektrode 450-3 des Sensors 400 den Basisanschluss 450-3.

Durch den in Fig. 4 gezeigten Sensor 400 wird somit ein vertikaler Bipolartransistor 420 implementiert, wobei der vertikale Bipolartransistor 420 oberhalb einer in dem Substrat 110 befindlichen Ausleseschaltung über den ersten bis dritten Abstandshalter aufgehängt ist und mit zugeordneten Kontaktflächen des Substrats 110 elektrisch verbunden ist. Durch die vertikale Kontaktierung des Emitters, des Kollektors und der Basis 422, 424, 426 gemäß dem in Fig. 4 gezeigten Ausführungsbeispiel kann ein aufgenommenes oder zu detektierendes Signal direkt an dem oberhalb der Auslesenschaltung aufgehängten vertikalen Bipolartransistor 420 bzw. am Sensorelement verstärkt werden. Daher ist es möglich, die im Wesentlichen laterale Ausdehnung der Ausleseschaltung zu verkleinern, wodurch eine verbesserte Flächenausnutzung bzw. kompaktere Bauweise bei einer gleichzeitig erhöhten Sensitivität des Sensors erreicht werden kann.

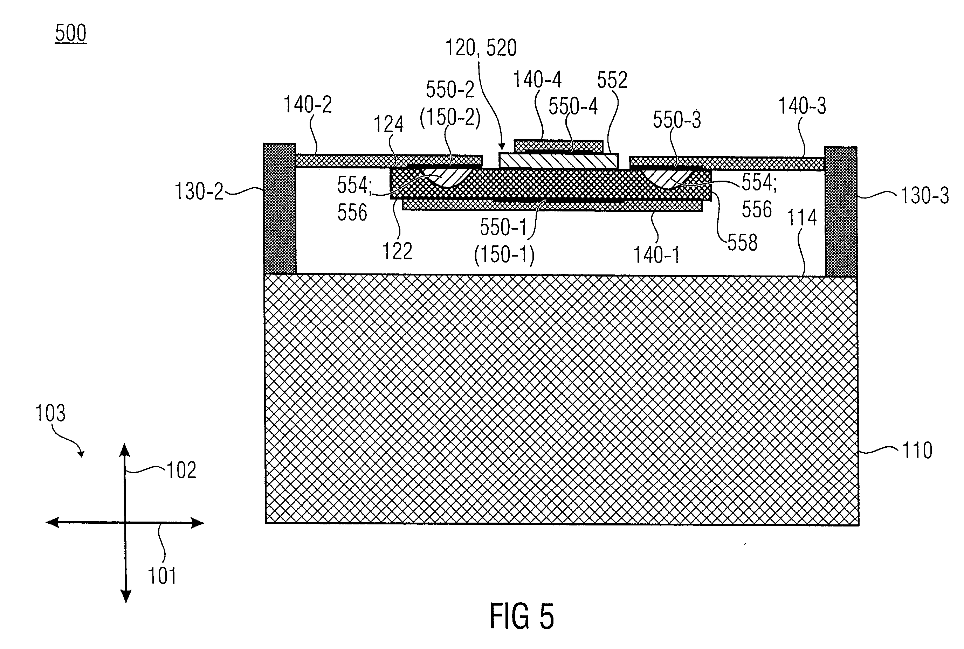

Fig. 5 zeigt eine Querschnittsansicht eines Sensors 500 mit einem Feldeffekttransistor gemäß einem weiteren Ausführungsbeispiel der vorliegenden Erfindung. Der Sensor 500 mit der ersten und der zweiten Elektrode 550-1, 550-2 in Fig. 5 entspricht im Wesentlichen dem Sensor 100 mit der ersten und der zweiten Elektrode 150-1, 150-2 in Fig. 1. Bei dem Ausführungsbeispiel gemäß Fig. 5 weist der Sensor 500 ferner einen dritten Abstandshalter 130-3 und einen vierten Abstandshalter, eine dritte und eine vierte Haltestruktur 140-3, 140-4 und eine dritte und eine vierte Elektrode 550-3, 550-4 auf. In der Querschnittsansicht von Fig. 5 sind der erste und der vierte Abstandshalter nicht gezeigt. Der dritte Abstandshalter 130-3 und der vierte Abstandshalter sind auf dem Substrat 110 angeordnet. Ferner wird die dritte Haltestruktur 140-3 seitlich neben der Membran 120 von dem dritten Abstandshalter 130-3 gehalten und kontaktiert die dritte Elektrode 550-3, während die vierte Haltestruktur 140-4 seitlich neben der Membran 120 von dem vierten Abstandshalter gehalten wird und die vierte Elektrode 550-4 kontaktiert.

Bei dem in Fig. 5 gezeigten Ausführungsbeispiel weist die Membran 120 des Sensors 500 einen Feldeffekttransistor 520 mit einem Gate-, Drain-, Source- und Bulkanschluss 550-4, 550-2, 550-3, 550-1 (bzw. Gate, Drain, Source und Bulk 552, 554, 556, 558) auf. Die erste und die zweite Elektrode 550-1, 550-2 bilden jeweils einen unterschiedlichen aus dem Bulkanschluss 550-1 einerseits und den Gate-, Drain- und Sourceanschlüssen 550-4, 550-2, 550-3 andererseits. Ferner werden die anderen der Gate-, Drain- und Sourceanschlüsse 550-4, 550-2, 550-3 von der dritten und der vierten Elektrode 550-3, 550-4 gebildet.

Gate, Drain, Source und Bulk 552, 554, 556, 558 des Feldeffekttransistors 520 können beispielsweise eine erste Transistorstruktur (NMOS-Transistor, "n-type metal-oxide semiconductor transistor", n-Kanal-Metall-Oxid-Halbleiter-Transistor) mit zwei n-dotierten Halbleiterbereichen (Source und Drain 554, 556), einem dazwischen befindlichen p-dotierten Halbleiterbereich (Bulk 558) und einer auf dem p-dotierten Halbleiterbereich befindlichen isolierenden Schicht (Gate 552) oder eine zweite Transistorstruktur (PMOS-Transistor, "p-channel metal-oxide semiconductor transistor", p-Kanal-Metall-Oxid-Halbleiter-Transistor) mit zwei p-dotierten Halbleiterbereichen (Source und Drain 554, 556), einem dazwischen befindlichen n-dotierten Halbleiterbereich (Bulk 558) und einer auf dem n-dotierten Halbleiterbereich befindlichen isolierenden Schicht (Gate 552) bilden. Bei Ausführungsbeispielen gemäß Fig. 5 kann die erste Transistorstruktur ausgelegt sein, um im Betrieb derselben einen n-Kanal zu liefern. Somit kann mit der ersten Transistorstruktur beispielsweise ein n-Kanal-Feldeffekttransistor implementiert werden. Bei weiteren Ausführungsbeispielen gemäß Fig. 5 kann die zweite Transistorstruktur ausgelegt sein, um im Betrieb derselben einen p-Kanal zu liefern. Somit kann mit der zweiten Transistorstruktur, beispielsweise ein p-Kanal-Feldeffekttransistor implementiert werden.

Der in Fig. 5 gezeigte Sensor 500 kann beispielsweise ein MOSFET (Metall-Oxid-Halbleiter-Feldeffekttransistor) sein. Hierbei kann der MOSFET oberhalb einer in dem Substrat 110 befindlichen Ausleseschaltung über den ersten bis vierten Abstandshalter aufgehängt und mit zugeordneten Kontaktflächen des Substrats 110 elektrisch verbunden sein. Durch die Kontaktierung über die Gate-, Drain-, Source- und Bulkanschlüsse des MOSFET gemäß dem in Fig. 5 gezeigten Ausführungsbeispiel kann ein von dem MOSFET aufgenommenes Messsignal direkt an dem oberhalb der Ausleseschaltung aufgehängten MOSFET verstärkt werden, so dass es möglich ist, die im Wesentlichen laterale Ausdehnung der Ausleseschaltung zu verkleinern. Wie bei dem in Fig. 4 gezeigten Ausführungsbeispiel kann somit die Flächenausnutzung verbessert werden und gleichzeitig die Sensitivität des Sensors erhöht werden.

Bezugnehmend auf Fig. 4 und 5 können somit Transistorstrukturen, wie beispielsweise ein Bipolartransistor (Fig. 4) oder ein MOSFET (Fig. 5) bereitgestellt werden, die dadurch ausgezeichnet sind, dass das aufgenommene Messsignal direkt an der jeweiligen Transistorstruktur (Sensorelement) verstärkt werden kann und daher die Ausleseschaltung bzw. Verstärkerschaltung im Substrat kompakter aufgebaut sein kann.

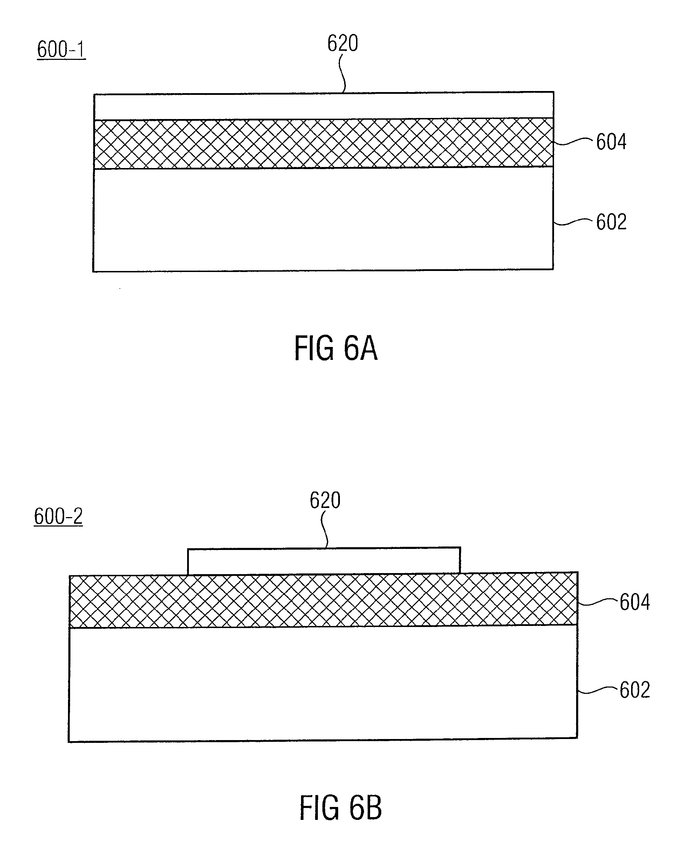

Fig. 6a bis 6d zeigen Querschnittsansichten zur Verdeutlichung eines erfindungsgemäßen Bereitstellens eines Sensorwafers. In Fig. 6a bis 6d ist beispielhaft eine Prozessfolge zur Bereitstellung des Sensorwafers gezeigt, wobei der Sensorwafer eine strukturierte Membranschicht aufweist, die dazu vorgesehen ist, von einer Membran des Sensors umfasst zu sein.

Fig. 6a zeigt beispielhaft einen SOI-(silicon on insulator, Silizium auf einem Insulator)Wafer 600-1. Der in Fig. 6a gezeigte SOI-Wafer 600-1 kann als Grundlage für das Bereitstellen des Sensorwafers verwendet werden. Bezugnehmend auf Fig. 6a weist der SOI-Wafer 600-1 beispielsweise ein SOI-Substrat 602, eine Membranschicht 620 und eine dazwischenliegende Oxidschicht 604 auf. Hierbei kann die Membranschicht 620 beispielsweise eine Halbleiterschicht mit einem einkristallinen Material (z. B. Silizium) sein, die von dem SOI-Substrat 602, wie beispielsweise einem Siliziumsubstrat, durch eine vergrabene Oxidschicht, wie beispielsweise einer BOX(Buried OXide)-Schicht getrennt ist. Die beispielsweise in Form einer einkristallinen Siliziumschicht vorliegende Membranschicht 620 dient als Grundlage für eine aktive Sensorschicht des herzustellenden Sensors. Anstelle des SOI-Wafers können für die in Fig. 6a bis 6d gezeigte Prozessfolge alternativ auch andere Halbleiter-Wafer verwendet werden.

Fig. 6b zeigt beispielhaft wie in einem Folgeschritt ein modifizierter SOI-Wafer 600-2 erhalten wird. Der in Fig. 6b gezeigte modifizierte SOI-Wafer 600-2 weist beispielsweise eine strukturierte Membranschicht 622 auf, wobei die strukturierte Membranschicht 622 durch eine Strukturierung der Membranschicht 620 des in Fig. 6a gezeigten SOI-Wafers 600-1 erzeugt wird.

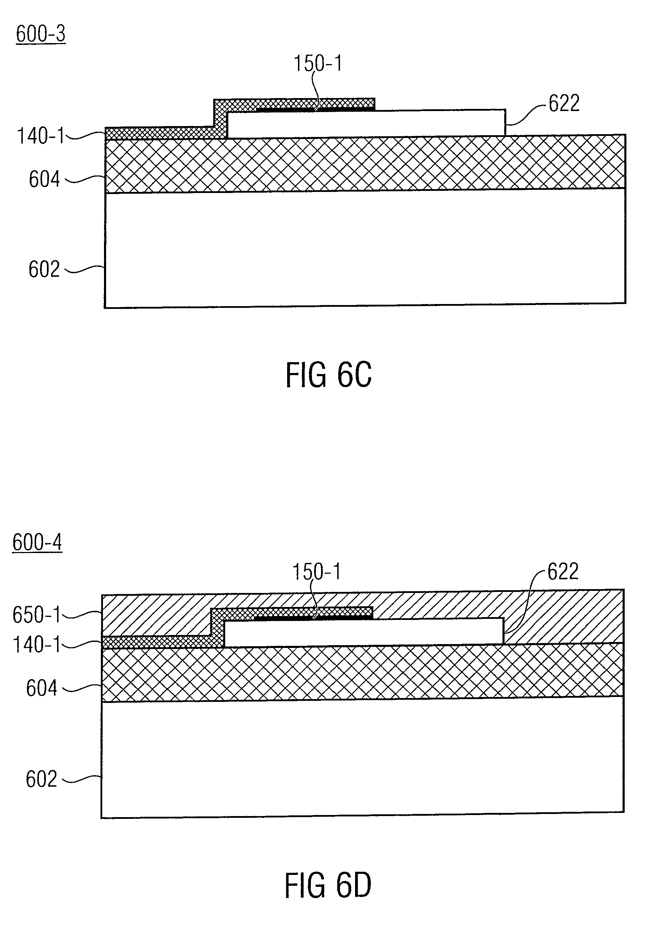

Fig. 6c zeigt beispielhaft wie in einem weiteren Folgeschritt ein weiterer modifizierter SOI-Wafer 600-3 erhalten wird. Der in Fig. 6c gezeigte weitere modifizierte SOI-Wafer 600-3 kann dadurch erzeugt werden, dass zunächst eine erste Elektrode 150-1 auf die strukturierte Membranschicht 622 des in Fig. 6b gezeigten SOI-Wafers 600-2 aufgebracht wird. Dann wird, wie es in Fig. 6c gezeigt ist, eine erste Haltestruktur 140-1 aufgebracht, so dass dieselbe die erste Elektrode 150-1 kontaktiert und sich seitlich von der strukturierten Membranschicht 622 weg erstreckt.

Fig. 6d zeigt beispielhaft wie schließlich in einem weiteren Folgeschritt der Sensorwafer 600-4 erhalten wird. Der in Fig. 6d gezeigte Sensorwafer 600-4 kann bereitgestellt werden, indem eine erste Bondschicht 650-1 auf die strukturierte Membranschicht 622 und die erste Haltstruktur 140-1 aufgebracht wird. Der mit der ersten Bondschicht 650-1 bereitgestellte Sensorwafer 600-4 stellt einen ersten Wafer für einen späteren Bondprozess dar.

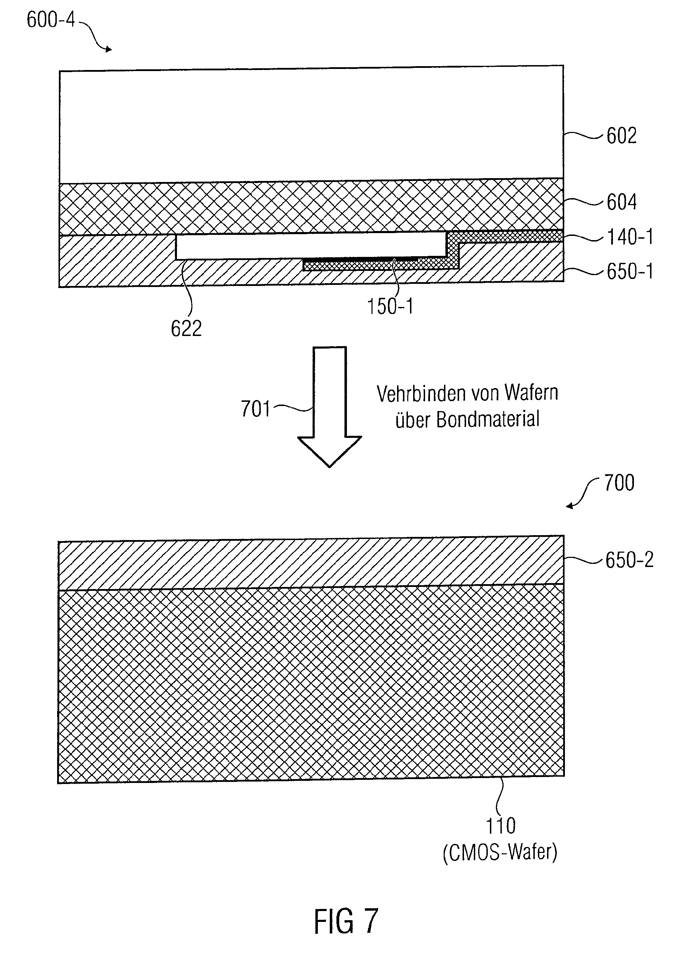

Fig. 7 zeigt eine Querschnittsansicht zur Verdeutlichung eines erfindungsgemäßen Verbindens eines Sensorwafers mit einem Substratwafer über ein Bondmaterial. In Fig. 7 ist ein erster Wafer 600-4 (Sensorwafer) und ein zweiter Wafer 700 (Substratwafer) gezeigt. Der erste Wafer 600-4 ist hierbei identisch mit dem in Fig. 6d bereitgestellten Sensorwafer. Der zweite Wafer 700 in Fig. 7 weist ein Substrat 110 auf (CMOS-Wafer).

Ferner weist der in Fig. 7 gezeigte zweite Wafer 700 eine zweite Bondschicht 650-2 oberhalb des Substrats 110 auf. Wie es durch den Pfeil 701 angedeutet ist, können der erste Wafer 600-4 und der zweite Wafer 700 über ein Bondmaterial verbunden werden, indem die erste Bondschicht 650-1 des ersten Wafers 600-4 mit der zweiten Bondschicht 650-2 des zweiten Wafers 700 gebondet werden. Das in Fig. 7 gezeigte Verbinden des Sensorwafers mit dem Substratwafer erfolgt beispielsweise basierend auf einem Wafer-to-Wafer Bonding (Waferbondverfahren). Die nach dem Bondprozess gemäß Fig. 7 verbundenen Wafer stellen eine Ausgangsstruktur für weitere Prozessschritte dar.

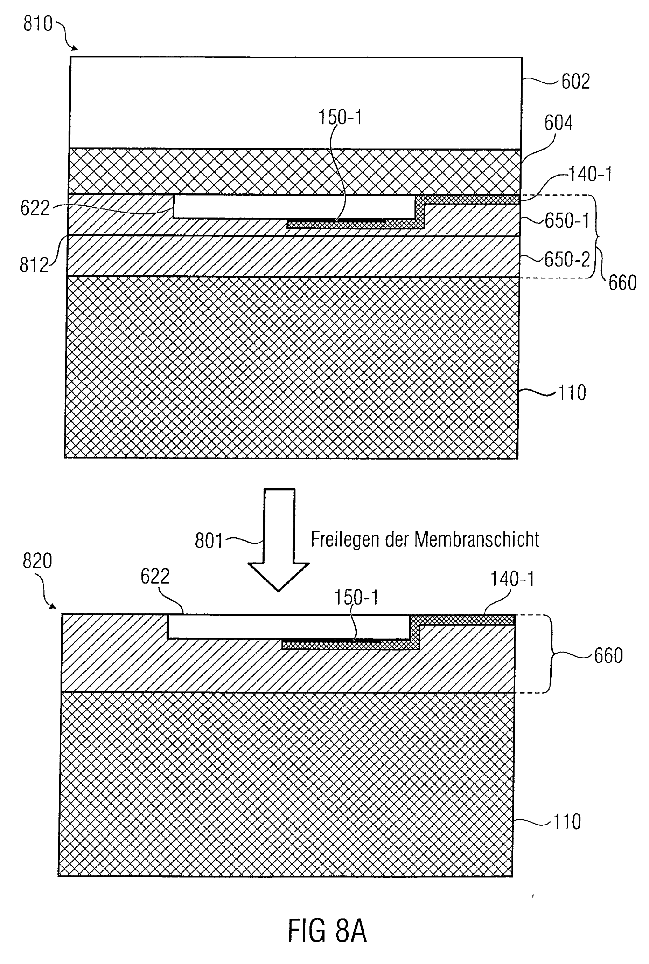

Fig. 8a bis 8c zeigen Querschnittsansichten zur Verdeutlichung eines erfindungsgemäßen Bearbeitens von miteinander verbundenen Sensor- und Substratwafern. In Fig. 8a ist die nach dem Bondprozess gemäß Fig. 7 erhaltene Ausgangsstruktur 810 gezeigt. Die in Fig. 8a gezeigte Ausgangsstruktur 810 weist beispielsweise eine Schichtfolge mit dem SOI-Substrat 602, der Oxidschicht 604, der strukturierten Membranschicht 622, der ersten Elektrode 150-1, der ersten Haltestruktur 140-1, der ersten und zweiten Bondschicht 650-1, 650-2 und dem Substrat 110 (Trägersubstrat) auf. Hierbei wird von der ersten und der zweiten Bondschicht 650-1, 650-2 ein Bereich 660 mit einem Bondmaterial gebildet, wobei sich zwischen der ersten und der zweiten Bondschicht 650-1, 650-2 eine Bondoberfläche 812 befindet. Die Bondoberfläche 812 ist nur in der Querschnittsansicht der Ausgangsstruktur 810 und nicht in den Querschnittsansichten zur Verdeutlichung der weiteren Prozessschritte gezeigt.

In Fig. 8a wird ferner ein beispielhaftes Freilegen der strukturierten Membranschicht 622 in einem weiteren Folgeschritt (Pfeil 801) verdeutlicht. Das Freilegen der strukturierten Membranschicht 622 erfolgt hierbei basierend auf der Ausgangsstruktur 810, die von den miteinander verbundenen Sensor- und Substratwafern gebildet werden. Die strukturierte Membranschicht 622 kann freigelegt werden, indem beispielsweise nicht mehr benötigte obere Schichten der Ausgangsstruktur 810 (z. B. das SOI-Substrat 602 und die Oxidschicht 604) durch ein Abschleifen oder durch ein selektives Ätzen entfernt werden. Nach dem Freilegen der strukturierten Membranschicht 622 ergibt sich somit die in Fig. 8a gezeigte modifizierte Struktur 820. Wie in Fig. 8a gezeigt, weist die modifizierte Struktur 820 die freigelegte Membranschicht 622 auf, die auf dem Bondbereich 660 oberhalb des Substrats 110 angeordnet ist.

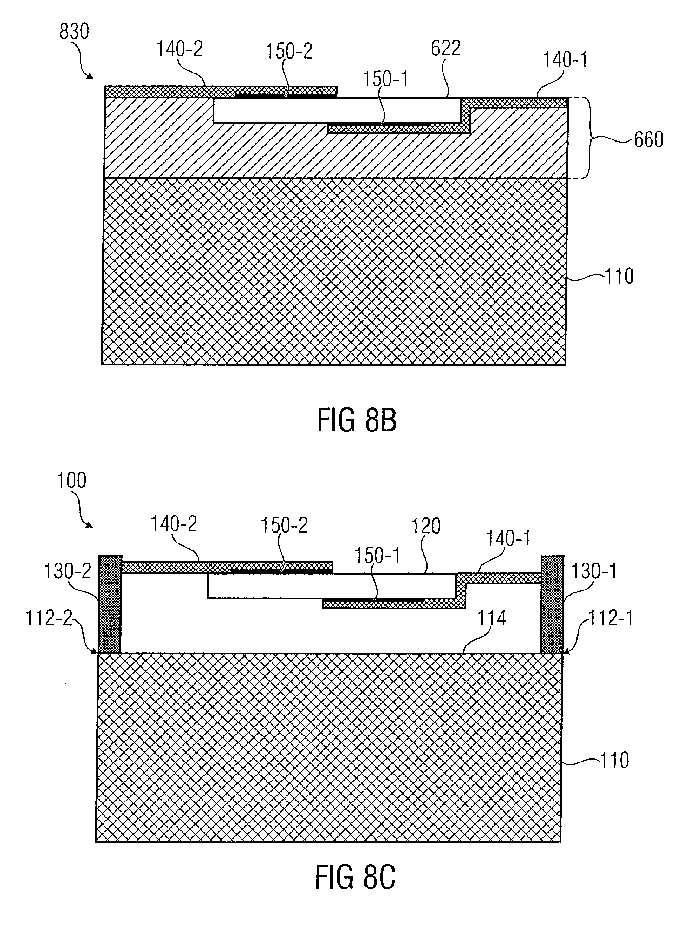

Fig. 8b zeigt wie in einem weiteren Folgeschritt eine weitere modifizierte Struktur 830, basierend auf der in Fig. 8a gezeigten modifizierten Struktur 820 erhalten wird. Die in Fig. 8b gezeigte weitere modifizierte Struktur 830 weist eine zweite Elektrode 150-2, die auf der strukturierten Membranschicht 622 angeordnet ist, und eine zweite Haltestruktur 140-2, die die zweite Elektrode 150-2 kontaktiert und sich seitlich von der (freigelegten) strukturierten Membranschicht 622 erstreckt, auf. Um die weitere modifizierte Struktur 830 gemäß Fig. 8b zu erhalten, können die zweite Elektrode 150-2 und die zweite Haltestruktur 140-2 beispielsweise nacheinander auf die strukturierte Membranschicht 622 aufgebracht werden. Dadurch wird es ermöglicht, dass die strukturierte Membranschicht 622 von zwei gegenüberliegenden Seiten derselben über die erste und die zweite Elektrode 150-1, 150-2 kontaktiert werden kann. Bei weiteren Ausführungsbeispielen kann vor dem Aufbringen der zweiten Elektrode 150-2 eine weitere Zwischenschicht auf die strukturierte Membranschicht 622 aufgebracht werden, so dass die zweite Elektrode 150-2 an eine Seite der Membranschicht 622 oder an eine Seite der Zwischenschicht angrenzt.

Fig. 8c zeigt wie in einem weiteren Folgeschritt schließlich der Sensor 100 von Fig. 1 erhalten wird. Der in Fig. 8c gezeigte Sensor 100 kann beispielsweise dadurch erhalten werden, dass zwei Abstandshalter 130-1, 130-2 gebildet werden, die die erste und die zweite Haltestruktur 140-1, 140-2 jeweils seitlich neben der Membran 120 tragen. Das Bilden der zweiten Abstandshalter kann beispielsweise durchgeführt werden, indem zunächst durch einen Ätzprozess durch die erste und die zweite Haltestruktur 140-1, 140-2 und den Bondbereich 660 Öffnungen vorgesehen werden, die sich bis auf Kontaktflächen 112-1, 112-2 des Substrats 110 erstrecken, und dann die vorgesehenen Öffnungen mit einem leitfähigen Material (z.B. einem Metall) gefüllt werden. Schließlich kann das Bondmaterial des Bondbereichs 660 beispielsweise durch ein Ätzen entfernt werden, so dass der Sensor 100 die Membran 120 aufweist, die über den ersten und den zweiten Abstandshalter 130-1, 130-2 aufgehängt und mit den Kontaktflächen 112-1, 112-2 des Substrats 110 elektrisch verbunden werden kann.

Bezugnehmend auf die vorherigen Figuren (Fig. 6a bis 6d, 7 und 8a bis 8c) umfasst ein Verfahren zum Herstellen eines Sensors (z.B. Sensor 100 in Fig. 1) somit beispielsweise die folgenden Schritte. In einem ersten Prozessschritt wird ein erster Wafer 600-4 bereitgestellt (siehe Fig. 6d). Der erste Wafer 600-4 weist ein Trägersubstrat 602, eine strukturierte Membranschicht 622, eine erste Elektrode 150-1 und eine erste Haltestruktur 140-1 auf. Die strukturierte Membranschicht 622 ist auf dem Trägersubstrat 602 angeordnet und ist vorgesehen, von einer Membran 120 des Sensors 100 umfasst zu sein. Die erste Haltestruktur 140-1 kontaktiert die erste Elektrode 150-1 auf einer dem Trägersubstrat 602 abgewandten ersten Hauptseite der Membranschicht 622 und erstreckt sich seitlich von der Membranschicht 622 weg. Das Bereitstellen des ersten Wafers 600-4 kann beispielsweise ein Herstellen einer Halbleiterschicht 620 mit einem einkristallinen Material oder mit einem amorphen Material umfassen. Ferner kann das Bereitstellen des ersten Wafers 600-4 so durchgeführt werden, dass derselbe ein SOI-Wafer ist. Hierbei kann die Membranschicht 622 beispielsweise eine einkristalline Siliziumschicht des SOI-Wafers sein, die von einem SOI-Substrat 602 des SOI-Wafers durch eine vergrabene Oxidschicht 604 getrennt ist.

In weiteren Prozessschritten kann der erste Wafer 600-4 und ein bereitgestellter zweiter Wafer 700, der ein Substrat 110 aufweist, über ein Bondmaterial verbunden werden (Fig. 7). Hierbei kann der zweite Wafer 700 bereitgestellt werden, indem beispielsweise ein Wafer mit einer Ausleseschaltung hergestellt wird, wobei zumindest ein Teil der Ausleseschaltung in dem Substrat 110 angeordnet ist.

In einem weiteren Prozessschritt wird das Trägesubstrat 602 entfernt, so dass die der ersten Hauptseite gegenüberliegende zweite Hauptseite der Membranschicht 622 freiliegt (Fig. 8a). In einem weiteren Prozessschritt wird eine zweite Haltestruktur 140-2 aufgebracht, so dass dieselbe eine zweite Elektrode 150-2 auf einer der ersten Hauptseite gegenüberliegenden zweiten Hauptseite der Membranschicht 622 kontaktiert und sich seitlich von der Membranschicht 622 weg erstreckt (Fig. 8b). Hierbei kann die zweite Elektrode 150-2 an die zweite Hauptseite der Membranschicht 622 oder an eine Seite einer zuvor aufgebrachten Zwischenschicht angrenzen.

In weiteren Prozessschritten werden zwei Abstandshalter 130-1, 130-2, die die erste und die zweite Haltestruktur 140-1, 140-2 jeweils seitlich neben der Membran 120 tragen, gebildet und schließlich das Bondmaterial entfernt werden (Fig. 8c).

Bei weiteren Ausführungsbeispielen kann bei dem im Vorhergehenden beschriebenen Verfahren ferner eine erste Bondschicht 650-1 auf die strukturierte Membranschicht 622 aufgebracht werden und der zweite Wafer 700 so bereitgestellt werden, dass derselbe eine zweite Bondschicht 650-2 aufweist. Dann können der erste und der zweite Wafer 600-4, 700 (Sensor- und Substratwafer) durch ein Bonden der ersten mit der zweiten Bondschicht 650-1, 650-2 verbunden werden.

Mit dem erfindungsgemäßen Verfahren kann somit die Herstellung von beispielsweise gebondeten IR-Sensoren mit einem vertikalen Aufbau und verbesserten elektrischen und optischen Eigenschaften ermöglicht werden. Kurz zusammengefasst kann die Herstellung beispielsweise die folgenden Schritte umfassen.

Zunächst wird ein Wafer (Substratwafer) mit einer Ausleseschaltung (Read Out Integrated Circuit, ROIC) gefertigt. Dieser weist in den Bereichen, in denen später der elektrische Kontakt zum Sensorwafer hergestellt wird, Kontaktflächen auf. Als nächstes wird der Sensorwafer, beispielsweise basierend auf einer SOI-Technologie, bzw. einer Technologie, die eine dünne aktive Halbleiterschicht liefert, gefertigt (Fig. 6a). Hierbei wird als erstes die aktive Halbleiterschicht strukturiert (Fig. 6b), wobei anschließend die Kontaktierung der Halbleiterschicht durch eine spätere Haltestruktur erfolgt (Fig. 6c). Des Weiteren erfolgt die Herstellung eines Bondlayers bzw. einer Bondschicht (Fig. 6d) und der eigentliche Bondprozess (Fig. 7). In einem weiteren Schritt wird die aktive Schicht (strukturierte Membranschicht 622), die sich nun an einer Rückseite bzw. an einer dem Substrat 110 abgewandten Hauptseite der Membranschicht 622 befindet, freigelegt (Fig. 8a) und wiederum mit einer zusätzlichen Haltestruktur von der Rückseite her bzw. von oben kontaktiert (Fig. 8b). Anschließend erfolgt die Kontaktierung der Sensorstruktur (Membran 120) mit dem Schaltungswafer bzw. Substratwafer, und im letzten Schritt wird die Membran freigeätzt (Fig. 8c).

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als ein entsprechender Verfahrensschritt oder als ein Merkmal eines Verfahrensschrittes zu verstehen ist. Analog dazu stellen Aspekte dazu, die im Zusammenhang mit einem oder als einem Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterungen der Ausführungsbeispiele hierin präsentiert wurden, beschränkt sei.

Ausführungsbeispiele der vorliegenden Erfindung schaffen eine Möglichkeit, die Ausleseschaltung und die Sensorelemente, wie beispielsweise Dioden- oder Transistorstrukturen, in verschiedenen Wafern zu fertigen und die beiden Wafer abschließend durch ein sogenanntes Wafer-to-Wafer-Bonding zusammenzuführen. Das Wafer-to-Wafer-Bonding bietet den Vorteil einer flexibleren Kontaktierung des jeweiligen Sensorelements (z. B. IR-Sensor). So kann beispielsweise die Kontaktierung eines einkristallinen Sensors bzw. des Sensorelements vertikal erfolgen. Durch solch eine vertikale Kontaktierung kann ein geringeres 1/f-Rauschen erhalten werden, da der durch das Bauelement fließende Strom vorzugsweise im einkristallinen Material aufzufinden ist und gegenüber beispielsweise lateral kontaktierten Bauelementen eine geringere Grenzfläche zwischen z.B. Silizium und Siliziumdioxid sieht.

Ausführungsbeispiele der vorliegenden Erfindung schaffen eine Prozessführung, mit der es möglich ist, IR-Sensoren flexibel elektrisch zu kontaktieren und somit vorteilhafte Eigenschaften des Sensors zu generieren. So können die IR-Sensoren nicht nur lateral, sondern auch vertikal kontaktiert und aufgebaut werden, wobei der Strom vorzugsweise im einkristallinen Material fließt und das Bauelement ein geringes 1/f-Rauschen besitzt.

Ausführungsbeispiele der vorliegenden Erfindung schaffen verbesserte Sensoren aus einkristallinem oder nicht-einkristallinem Material, die vertikal aufgebaut werden können. Dadurch kann ein geringeres 1/f-Rauschen der so kontaktierten Bauelemente erhalten werden.

Weitere Ausführungsbeispiele der vorliegenden Erfindung ermöglichen eine mehrfache Kontaktierung eines Sensor- bzw. Bauelements, und zwar für eine Vierpunktmessung.

Weitere Ausführungsbeispiele der vorliegenden Erfindung schaffen Sensoren mit einer sich darunter befindlichen CMOS-Schaltung, optische vertikale Sensoren (im Wellenlängenbereich von 300 nm bis 14 µm) oder Multiwellenlängensensoren für einen alternierenden Betrieb im UV-/Weißlichtbereich und IR-Bereich.

Bedingt durch den Freiheitsgrad der Kontaktierung der Sensorelemente ist es möglich, Sensoren mit verbesserten elektrischen Rauscheigenschaften herzustellen. So kann beispielsweise eine vertikale Diodenstruktur gemäß Fig. 2 hergestellt werden, deren Strom vorzugsweise durch das einkristalline Material fließt. Dabei kann die Diode sowohl im Vorwärtsbetrieb (IR-Detektion), als auch im Sperrbereich (UV-/Weißlicht-Detektion) verwendet werden, so dass ein Multiwellenlängensensor geschaffen wird. Ferner können mit dieser Kontaktierung Transistorstrukturen, wie z. B. Bipolartransistoren gemäß Fig. 4 oder MOSFETs gemäß Fig. 5 geschaffen werden. Der Vorteil dieser Strukturen ist, dass das aufgenommene Signal direkt am Sensorelement verstärkt und somit die Verstärkerschaltung im CMOS minimiert werden kann.

Eine andere vorteilhafte Struktur stellt der mittels einer Vierpunktmessung kontaktierte Sensor gemäß Fig. 3 dar. Damit kann der Widerstand bzw. eine Widerstandsänderung des Sensors sehr genau gemessen werden. Wie im Zusammenhang mit Fig. 3 beschrieben, wird hierbei ein Strom I eingeprägt und der Spannungsabfall U am Sensorelement gemessen.

Ausführungsbeispiele der vorliegenden Erfindung schaffen eine Struktur in Form eines einkristallinen Sensors mit einer vertikalen Flussrichtung und einen Prozessablauf zur Herstellung derselben. Ganz allgemein wird also ein einkristalliner Sensor mit einer vertikalen Stromflussrichtung geschaffen. Hierbei kann es sich um einen optischen als auch um einen mechanischen Sensor handeln, wobei sich der jeweilige Sensor über einer CMOS-Schaltung befindet.

Gemäß weiteren Ausführungsbeispielen können Sensoren auf Basis eines amorphen Materials mit einer vertikalen Stromflussrichtung geschaffen werden.

Weitere Ausführungsbeispiele schaffen eine Vierpunktmessmethode für optische Sensoren, um den Widerstands eines Sensors sehr präzise bestimmen zu können.

Ferner wird es durch die vertikale Kontaktierung des Sensors ermöglicht, denselben als Multiwellenlängensensor zu benutzen. So kann beispielsweise eine vertikale Diode in Vorwärtsrichtung als IR-Sensor und in Sperrrichtung als UV-/Weißlichtsensor verwendet werden.

Durch die vertikale Kontaktierung kann auch die Realisierung eines Sensors auf Basis eines Transistors gewährleistet werden. So kann z.B. ein einkristalliner Bipolartransistor/MOSFET geschaffen werden, der vorteilhaft mit einer vertikalen Kontaktierung hergestellt werden kann.

## Patentansprüche

1. Sensor (100), mit folgenden Merkmalen:
einem Substrat (110);
einer Membran (120);
einem ersten und einem zweiten Abstandshalter (130-1, 130-2), die auf dem Substrat (110) angeordnet sind;
einer ersten Haltestruktur (140-1), die seitlich neben der Membran (120) von dem ersten Abstandshalter (130-1) gehalten wird und eine erste Elektrode (150-1) auf einer dem Substrat (110) zugewandten ersten Hauptseite (122) der Membran (120) kontaktiert; und
einer zweiten Haltestruktur (140-2), die seitlich neben der Membran (120) von dem zweiten Abstandshalter (130-2) gehalten wird und eine zweite Elektrode (150-2) auf einer der ersten Hauptseite (122) gegenüberliegenden zweiten Hauptseite (124) der Membran (120) kontaktiert, so dass die Membran (120) über den ersten und zweiten Abstandshalter (130-1, 130-2) aufgehängt und mit Kontaktflächen (112-1, 112-2) des Substrats (110) elektrisch verbunden ist.

2. Der Sensor (100) nach Anspruch 1, wobei die Membran (120) eine Halbleiterschicht mit einem einkristallinen Material oder mit einem amorphen Material aufweist.

3. Der Sensor (100) nach Anspruch 1 oder 2, der ferner eine Ausleseschaltung aufweist, wobei zumindest ein Teil der Ausleseschaltung in dem Substrat (110) lateral zwischen dem ersten und zweiten Abstandshalter (130-1, 130-2) angeordnet ist.

4. Der Sensor (200) nach einem der Ansprüche 1 bis 3, wobei die Membran (220) einen pn-Übergang (222) aufweist, der sich parallel zu einer Oberfläche des Substrats (110) erstreckt, so dass der pn-Übergang (222) seriell zwischen die Kontaktflächen (112-1, 112-2) des Substrats (110) geschaltet ist.

5. Der Sensor (200) nach Anspruch 4, wobei der Sensor (200) ferner eine Ausleseschaltung aufweist, die ausgelegt ist, um den pn-Übergang (222) in Flussrichtung zu betreiben, um einfallende IR-Strahlung (211) zu detektieren.

6. Der Sensor (200) nach Anspruch 4 oder 5, wobei der Sensor (200) ferner eine Ausleseschaltung aufweist, die ausgelegt ist, um den pn-Übergang (222) in Sperrrichtung zu betreiben, um einfallende UV- und/oder Weißlichtstrahlung (213) zu detektieren.

7. Der Sensor (200) nach Anspruch 4, wobei der Sensor (200) ferner eine Ausleseschaltung aufweist, die ausgelegt ist, um den pn-Übergang (222) alternierend in einem ersten Betriebszyklus in Flussrichtung und in einem zweiten Betriebszyklus in Sperrrichtung zu betreiben, um in dem ersten Betriebszyklus einfallende IR-Strahlung (211) und in dem zweiten Betriebszyklus einfallende UV- und/oder Weißlichtstrahlung (213) zu detektieren.

8. Der Sensor (300) nach einem der Ansprüche 1 bis 3, der ferner einen dritten und einen vierten Abstandshalter (130-4), eine dritte und eine vierte Haltestruktur (140-3, 140-4) und eine dritte und eine vierte Elektrode (350-3, 350-4) aufweist, wobei die erste bis vierte Elektrode (350-1, 350-2, 350-3, 350-4) entlang einer Flussrichtung (305) beabstandet voneinander auf einer jeweiligen der ersten und zweiten Hauptseite (122, 124) der Membran (120) angeordnet sind, wobei der dritte und vierte Abstandshalter (130-4) auf dem Substrat (110) angeordnet sind, wobei die dritte Haltestruktur (140-3) seitlich neben der Membran (120) von dem dritten Abstandshalter gehalten wird und die dritte Elektrode (350-3) kontaktiert und die vierte Haltestruktur (140-4) seitlich neben der Membran (120) von dem vierten Abstandshalter (130-4) gehalten wird und die vierte Elektrode (350-4) kontaktiert, wobei der Sensor (300) ferner eine Ausleseschaltung aufweist, die ausgelegt ist, um über ein erstes Paar (350-2, 350-4) der ersten bis vierten Elektroden (350-1, 350-2, 350-3, 350-4), die entlang der Flussrichtung (305) unter den ersten bis vierten Elektroden (350-1, 350-2, 350-3, 350-4) am weitesten voneinander beabstandet sind, einen vorbestimmten Stromfluss (I) zu erzeugen und eine elektrische Spannung (U) zwischen einem zweiten Paar (350-1, 350-3) der ersten bis vierten Elektroden (350-1, 350-2, 350-3, 350-4), die in Flussrichtung (305) zwischen dem ersten Paar (350-2, 350-4) liegen, zu erfassen.

9. Der Sensor (400) nach einem der Ansprüche 1 bis 3, der ferner einen dritten Abstandshalter (130-3), eine dritte Haltestruktur (140-3) und eine dritte Elektrode (450-3) aufweist, wobei der dritte Abstandshalter (130-3) auf dem Substrat (110) angeordnet ist, wobei die dritte Haltestruktur (140-3) seitlich neben der Membran (120) von dem dritten Abstandshalter (130-3) gehalten wird und die dritte Elektrode (450-3) kontaktiert, wobei die Membran (120) einen vertikalen Bipolartransistor (420) mit einem Emitter-, Kollektor- und Basisanschluss (450-1, 450-2, 450-3) aufweist, wobei die erste und zweite Elektrode (450-1, 450-2) jeweils den Emitter- und Kollektoranschluss (450-1, 450-2) bilden, und wobei die dritte Elektrode (450-3) den Basisanschluss (450-3) bildet.

10. Der Sensor (500) nach einem der Ansprüche 1 bis 3, der ferner einen dritten (130-3) und einen vierten Abstandshalter, eine dritte und eine vierte Haltestruktur (140-3, 140-4) und eine dritte und eine vierte Elektrode (550-3, 550-4) aufweist, wobei der dritte (130-3) und vierte Abstandshalter auf dem Substrat (110) angeordnet sind, wobei die dritte Haltestruktur (140-3) seitlich neben der Membran (120) von dem dritten Abstandshalter (130-3) gehalten wird und die dritte Elektrode (550-3) kontaktiert und die vierte Haltestruktur (140-4) seitlich neben der Membran (120) von dem vierten Abstandshalter gehalten wird und die vierte Elektrode (550-4) kontaktiert, wobei die Membran (120) einen Feldeffekttransistor (520) mit einem Gate-, Drain-, Source- und Bulkanschluss (550-4, 550-2, 550-3, 550-1) aufweist, wobei die erste und die zweite Elektrode (550-1, 550-2) jeweils einen unterschiedlichen aus dem Bulkanschluss (550-1) einerseits und den Gate-, Drain- und Sourceanschlüssen (550-4, 550-2, 550-3) andererseits bilden, wobei die anderen der Gate-, Drain- und Sourceanschlüsse (550-4, 550-2, 550-3) von der dritten und vierten Elektrode (550-3, 550-4) gebildet werden.

11. Verfahren zum Herstellen eines Sensors (100), mit folgenden Schritten:
Bereitstellen eines ersten Wafers (600-4) mit einem Trägersubstrat (602) und einer strukturierten Membranschicht (622), die auf dem Trägersubstrat (602) angeordnet ist und vorgesehen ist, von einer Membran (120) des Sensors (100) umfasst zu sein, und einer ersten Haltestruktur (140-1), die eine erste Elektrode (150-1) auf einer dem Trägersubstrat (602) abgewandten ersten Hauptseite der Membranschicht (622) kontaktiert und sich seitlich von der Membranschicht (622) weg erstreckt;
Bereitstellen eines zweiten Wafers (700) mit einem Substrat (110);
Verbinden des ersten Wafers (600-4) und des zweiten Wafers (700) über ein Bondmaterial;
Entfernen des Trägersubstrats (602), so dass die der ersten Hauptseite gegenüberliegende zweite Hauptseite der Membranschicht (622) frei liegt;
Aufbringen einer zweiten Haltestruktur (140-2), so dass dieselbe eine zweite Elektrode (150-2) auf einer der ersten Hauptseite gegenüberliegenden zweiten Hauptseite der Membranschicht (622) kontaktiert und sich seitlich von der Membranschicht (622) weg erstreckt;
Bilden zweiter Abstandshalter (130-1, 130-2), die die erste und zweite Haltestruktur (140-1, 140-2) jeweils seitlich neben der Membran (120) tragen; und
Entfernen des Bondmaterials.

12. Das Verfahren nach Anspruch 11, wobei das Bereitstellen des ersten Wafers (600-4) ein Herstellen einer Halbleiterschicht (620) mit einem einkristallinen Material oder mit einem amorphen Material umfasst.

13. Das Verfahren nach Anspruch 11 oder 12, wobei das Bereitstellen des ersten Wafers (600-4) so durchgeführt wird, dass der Wafer (600-4) ein SOI-Wafer ist, wobei die Membranschicht (622) eine einkristalline Siliziumschicht des SOI-Wafers ist, die von einem SOI-Substrat (602) des SOI-Wafers durch eine vergrabene Oxidschicht (604) getrennt ist.

14. Das Verfahren nach einem der Ansprüche 11 bis 13, wobei das Bereitstellen des zweiten Wafers (700) ein Herstellen eines Wafers mit einer Ausleseschaltung umfasst, wobei zumindest ein Teil der Ausleseschaltung in dem Substrat (110) angeordnet ist.

15. Das Verfahren nach einem der Ansprüche 11 bis 14, das ferner ein Aufbringen einer ersten Bondschicht (650-1) auf die strukturierte Membranschicht (622) umfasst, wobei das Bereitstellen des zweiten Wafers (700) so durchgeführt wird, dass der zweite Wafer (700) eine zweite Bondschicht (650-2) aufweist, wobei das Verbinden des ersten und zweiten Wafers (600-4, 700) ein Bonden der ersten mit der zweiten Bondschicht (650-1, 650-2) umfasst.
